# EUROPÄISCHE PATENTSCHRIFT

(11) **EP 4 377 560 B1**
(45) Veröffentlichungstag und Bekanntmachung des Hinweises auf die Patenterteilung: **16.04.2025**
(21) Anmeldenummer: 22744756.2
(22) Anmeldetag: 15.07.2022
(51) Int. Cl.: F01N 3/021, F01N 3/28, F01N 13/14, B01D 53/94

(54) **VERFAHREN ZUR VERBESSERUNG DER BESCHICHTUNG EINES WABENKÖRPERS MIT EINER KATALYTISCH AKTIVEN BESCHICHTUNG**
METHOD FOR IMPROVING THE COATING OF A HONEYCOMB BODY WITH A CATALYTICALLY ACTIVE COATING
PROCÉDÉ D'AMÉLIORATION DE REVÊTEMENT D'UN CORPS EN NID D'ABEILLE AVEC REVÊTEMENT À ACTION CATALYTIQUE

(30) Priorität: 28.07.2021 DE 102021208131
(43) Veröffentlichungstag der Anmeldung: 05.06.2024
(73) Patentinhaber: Vitesco Technologies GmbH, 93055 Regensburg (DE)
(72) Erfinder: HOLZ, Oswald, 80687 München (DE); ODENTHAL, David, 80687 München (DE)
(74) Vertreter: Vitesco Technologies
(86) Internationale Anmeldenummer: PCT/EP2022/069901
(87) Internationale Veröffentlichungsnummer: WO 2023/006452

(56) Entgegenhaltungen:
- WO-A1-2015/013545
- US-A1- 2017 369 123
- US-A1- 2019 112 960
- US-A1- 2020 171 529

## Beschreibung

Verfahren zur Verbesserung der Beschichtung eines Wabenkörpers mit einer katalytisch aktiven Beschichtung

### Technisches Gebiet

Die Erfindung betrifft ein Verfahren zur Herstellung einer Vorrichtung zur Nachbehandlung von Abgasen und zur Beschichtung eines in der Vorrichtung vorgesehenen Wabenkörpers mit einer katalytisch aktiven Oberflächenbeschichtung, wobei der Wabenkörper aus einer Mehrzahl von metallischen zumindest teilweise strukturierten Folien gebildet ist, die aufeinander gestapelt und aufgewickelt sind, so dass der Wabenkörper eine Mehrzahl von entlang einer Hauptdurchströmungsrichtung durchströmbare Strömungskanäle ausbildet, wobei der Wabenkörper in einem Innenmantel aufgenommen ist und mit diesem dauerhaltbar verbunden ist, wobei der Innenmantel in einem als Gehäuse dienenden Außenmantel angeordnet ist und mit diesem dauerhaltbar verbunden ist.

### Stand der Technik

Wabenkörper für Katalysatoren zur Abgasnachbehandlung von Verbrennungsmotoren weisen eine Mehrzahl von entlang einer Hauptdurchströmungsrichtung durchströmbaren Strömungskanäle auf. Wabenkörper, insbesondere Wabenkörper aus Metall, sind durch eine Vielzahl von glatten und/oder zumindest teilweise strukturierten Metallfolien gebildet, die aufeinandergestapelt und zum endgültigen Wabenkörper aufgewickelt sind. Die aus den Metallfolien gebildete Matrix wird zur Stabilisierung und zum Zwecke des Schutzes vor mechanischen Störeinflüssen in ein Gehäuse eingesetzt und mit diesem dauerhaltbar verbunden.

Das Gehäuse ist im einfachsten Fall durch ein Rohr gebildet, welches dazu ausgebildet ist, die Matrix in seinem Inneren aufzunehmen. Eine weitere Funktion des Gehäuses ist es, die Durchströmung des Wabenkörpers sicherzustellen und insbesondere das Vorbeiströmen von Abgas am Wabenkörper zu vermeiden.

Die Befestigung der Matrix im Gehäuse muss einerseits dauerhaltbar erfolgen, gleichzeitig soll das Gehäuse möglichst leicht und somit dünnwandig aufgebaut sein. Einige Ausführungsformen von Katalysatoren weisen einen Innenmantel auf, welcher die Matrix direkt aufnimmt. Der Innenmantel ist dann über geeignete Abstützungen gegenüber dem Gehäuse beziehungsweise dem Außenmantel abgestützt.

Die US 2017/369123 A1 offenbart einen Katalysator zur Behandlung von Abgasen aus einem Motorradmotor. Der Katalysator umfasst ein Gehäuse mit einem stromaufwärts gelegenen Ende und einem stromabwärts gelegenen Ende. Der Gehäusekörper erstreckt sich zwischen dem stromaufwärts gelegenen Ende und dem stromabwärts gelegenen Ende. Ein Katalysatormantel ist innerhalb des Gehäusekörpers so angeordnet, dass ein Hohlraum zwischen dem Katalysatormantel und dem Gehäusekörper gebildet wird. In dem Katalysatormantel ist ein Katalysator angeordnet. In dem Hohlraum zwischen dem Gehäusekörper und dem Katalysatormantel ist ein Isolator angeordnet.

Die US 2019/112960 A1 offenbart eine Katalysatorvorrichtung, welche einen Katalysatorträger, einen rohrförmigen Abschnitt, der den Katalysatorträger aufnimmt, eine Haltematte, die den Katalysatorträger hält, einen Isolator, der über der äußeren Umfangsfläche des rohrförmigen Abschnitts vorgesehen ist, und ein Wärmeisolierelement, das zwischen dem Isolator und dem rohrförmigen Abschnitt angeordnet ist, aufweist. Der Bereich der äußeren Umfangsfläche des rohrförmigen Teils zwischen dem stromaufwärts gelegenen Ende und dem stromabwärts gelegenen Ende in Strömungsrichtung des Abgases ist in zwei Unterbereiche unterteilt, die in Richtung der Achse des rohrförmigen Teils angeordnet sind.

Die WO 2015/013545 A1 offenbart ein Verfahren zur Bildung beschichteter Substrate zur Verwendung in Katalysatoren sowie Waschmittelzusammensetzungen. Weiterhin offenbart die Druckschrift ein Verfahren, das zur Herstellung der beschichteten Substrate geeignet ist, und die dadurch gebildeten beschichteten Substrate, bei denen in einigen Fällen eisenausgetauschte Zeolithteilchen verwendet werden, die eine verbesserte Leistung wie niedrigere Abgastemperaturen und geringere Schadstoffwerte in Abgasen bieten. Das katalytische Material wird durch ein plasmagestütztes Verfahren hergestellt, das eine geringere Tendenz zur Migration des Trägermaterials bei hohen Temperaturen aufweist und somit weniger anfällig für die Alterung des Katalysators nach längerem Gebrauch ist. Außerdem werden Katalysatoren mit den beschichteten Substraten offenbart, die im Vergleich zu Katalysatoren, die mit Hilfe von Lösungschemie auf Substraten abgeschieden werden, vorteilhafte Eigenschaften aufweisen.

Die US 2020/171529 A1 offenbart eine Vorrichtung und ein Verfahren zur Beschichtung von Substraten mit Washcoats. Insbesondere geht es um die Beschichtung von Substraten, die zur Abgasreinigung verwendet werden.

Nachteilig an den Vorrichtungen im Stand der Technik ist insbesondere, dass zwischen den einzelnen Elementen eines Katalysators, zum Beispiel zwischen dem Innenmantel und dem Außenmantel, Luftspalte entstehen können, welche bei der Beschichtung der Matrix mit einem katalytisch aktiven Material, dem sogenannten Washcoat, durch dieses Material zugesetzt werden können. Durch mechanische Erschütterungen sowie thermische Einflüsse im Betrieb kann sich dieses in den Luftspalten festgesetzte Material lösen, wodurch es zu Beschädigungen und/oder der katalytischen Deaktivierung nachgelagerter Komponenten zur Abgasnachbehandlung kommen kann.

Darüber hinaus ist es nachteilig, dass der in einem Spalt eingebrachte Washcoat nicht an der katalytischen Reaktion am Wabenkörper teilnimmt und er somit ohne Funktion ist. Die tatsächlich benötigte Menge des Washcoats für die Beschichtung des Wabenkörpers ist somit eigentlich niedriger. Der unnötige Mehrverbrauch ist insbesondere ein Nachteil, wenn der Washcoat Edelmetalle aufweist, welche hochpreisig sind.

### Darstellung der Erfindung, Aufgabe, Lösung, Vorteile

Daher ist es die Aufgabe der vorliegenden Erfindung ein Verfahren zu schaffen, welches es ermöglicht den Wabenkörper in einem Gehäuse möglichst genau mit der minimal notwendigen Menge an Washcoat zu beschichten und insbesondere das Einbringen von Washcoat in Bereiche zu vermeiden, welche nicht an der katalytischen Reaktion teilnehmen.

Die Aufgabe hinsichtlich des Verfahrens wird durch ein Verfahren mit den Merkmalen von Anspruch 1 gelöst.

Ein Ausführungsbeispiel der Erfindung betrifft ein Verfahren zur Herstellung einer Vorrichtung zur Nachbehandlung von Abgasen und zur Beschichtung eines in der Vorrichtung vorgesehenen Wabenkörpers mit einer katalytisch aktiven Oberflächenbeschichtung, wobei der Wabenkörper aus einer Mehrzahl von metallischen zumindest teilweise strukturierten Folien gebildet ist, die aufeinander gestapelt und aufgewickelt sind, so dass der Wabenkörper eine Mehrzahl von entlang einer Hauptdurchströmungsrichtung durchströmbare Strömungskanäle ausbildet, wobei der Wabenkörper in einem Innenmantel aufgenommen ist und mit diesem dauerhaltbar verbunden ist, wobei der Innenmantel in einem als Gehäuse dienenden Außenmantel angeordnet ist und mit diesem dauerhaltbar verbunden ist, wobei vor dem Einbringen der katalytisch aktiven Beschichtung in die von dem Wabenkörper ausgebildeten Strömungskanäle eine Luftspalt oder Luftspalte, welche sich zwischen dem Außenmantel und dem Innenmantel ausgebildet haben, durch ein Füllmittel ausgefüllt werden.

Ein grundsätzliches Verfahren zur Herstellung einer Vorrichtung mit einem Wabenkörper in einem Innenmantel, welcher dauerhaltbar in einem Außenmantel aufgenommen ist, ist aus dem Stand der Technik bekannt. Die Matrix wird durch das Aufeinanderstapeln von Metallfolien, welche zumindest teilweise strukturiert sind, und das anschließende Aufwickeln des so erzeugten Lagenstapels um einen Dorn oder mehrere Dorne erzeugt. Die Matrix des Wabenkörpers wird mit dem Innenmantel beispielweise mittels eines Lötverfahrens verbunden, nachdem die Matrix in den Innenmantel eingesetzt wurde.

Der Innenmantel ist bevorzugt sehr dünn ausgestaltet und dient im Wesentlichen der Stabilisierung der Matrix, so dass diese nicht aufrollt oder auffächert.

Der Wabenkörper wird nachfolgend in ein als Abschluss zur Umwelt dienendes Gehäuse, welches durch einen Außenmantel gebildet ist, eingesetzt und mit diesem dauerhaltbar verbunden, beispielsweise durch Löten. Der Außenmantel ist wesentlich dicker als der Innenmantel und dient der Strömungsleitung des Abgases, dem mechanischen Schutz des Wabenkörpers und der Anbindung an weitere Komponenten zur Abgasnachbehandlung.

Insbesondere zwischen dem Innenmantel und dem Außenmantel können sich aufgrund von Toleranzen oder einfach aufgrund der Geometrie der einzelnen Bauteile Spalte ausbilden. Regelmäßig entsteht hierbei ein in Umfangsrichtung vollständig umlaufender Spalt zwischen dem Innenmantel und dem Außenmantel. Der Luftspalt erstreckt sich dabei in axialer Richtung regelmäßig nur entlang eines Teilabschnitts an dem Innenmantel und Außenmantel anliegen. Dieser Luftspalt bildet einen Hohlraum aus, der aus dem im Außenmantel eingeschlossenen Volumen, der Abgasströmungsstrecke, zugänglich ist.

Zur Beschichtung der Matrix wird ein Beschichtungsmaterial beispielsweise durch Überdruck oder durch Unterdruck durch die Strömungskanäle der Matrix gedrückt oder gesaugt. Dadurch wird die Oberfläche der Strömungskanäle beschichtet und somit eine katalytisch aktive Oberfläche geschaffen, an welcher die chemische Reaktion mit dem Abgas stattfindet. Durch das Einbringen des Beschichtungsmaterials kann es vorkommen, dass auch Strukturen außerhalb der Matrix mit dem Beschichtungsmaterial beaufschlagt werden, insbesondere kann das Beschichtungsmaterial in den ausgebildeten Luftspalt eindringen und dort verbleiben. Hierdurch wird einerseits die in der Vorrichtung verbleibende Menge des Beschichtungsmaterials deutlich erhöht und weiterhin kann sich das Beschichtungsmaterial im Betrieb aus dem Luftspalt lösen, wodurch es im Abgasstrom mitgeführt wird und gegebenenfalls in Strömungsrichtung nachgelagerte Komponenten zur Abgasnachbehandlung beschädigt. Insbesondere kann es zu einer sogenannten Vergiftung kommen, wenn katalytisch aktives Material in Kontakt mit andersartigem katalytisch aktivem Material auf anderen Wabenkörpern kommt. Es kann dann zu einer chemischen Reaktion kommen, welche einen nachgelagerten Katalysator ganz oder zumindest teilweise zerstört. Daher ist es dringend zu vermeiden, dass katalytisch aktives Beschichtungsmaterial sich in Bereichen ablagert, die nicht zur Beschichtung vorgesehen sind.

Um das Eindringen des Beschichtungsmaterial in den Luftspalt zu verhindern, wird dieser vor dem Einbringen des Beschichtungsmaterials mit einem Füllmittel aufgefüllt. Dieses Füllmittel kann beispielsweise mit einer Injektionsnadel in den Spalt eingebracht werden.

Das Füllmittel verfestigt sich im Luftspalt so sehr, dass es durch das Einbringen des Beschichtungsmittels nicht verdrängt wird und nicht eigenständig aus dem Luftspalt hinausläuft oder aus diesem hinausgesaugt wird.

Das Füllmittel kann bevorzugt durch eine Öffnung von außerhalb des Außenmantels in den Luftspalt eingebracht werden. Alternativ kann es vom offenen Querschnitt des Außenmantels direkt in den Luftspalt eingebracht werden.

Besonders vorteilhaft ist es, wenn das Füllmittel eine gelartige organische Masse ist. Eine gelartige organische Masse ist vorteilhaft, um sicherzustellen, dass der gesamte Luftspalt schnell und einfach ausgefüllt werden kann, indem das Füllmittel direkt in den Luftspalt eingespritzt wird. Das Füllmittel hat bevorzugt Materialeigenschaften, die ein Einspritzen in den Luftspalt erlauben. Darüber hinaus ist das Füllmittel derart beschaffen, dass es eine ausreichende Festigkeit innerhalb des Luftspaltes erreicht, so dass es nicht einfach aus dem Luftspalt herausgesaugt oder herausgedrückt werden kann.

Auch ist es vorteilhaft, wenn das Füllmittel in die Spalte eingebracht wird, bevor die Vorrichtung einer weiteren Wärmebehandlung, wie beispielswiese dem Trocknen oder dem Kalzinieren unterzogen wird. Dies ist vorteilhaft, da durch das Trocknen oder das Kalzieren eine deutliche Temperaturerhöhung der Vorrichtung erreicht wird, und das Füllmittel bevorzugt eine begrenzte thermische Stabilität aufweist, so dass es ab einer gewissen Temperatureinwirkung nicht mehr stabil ist beziehungsweise sich vollständig auflöst.

Ein bevorzugtes Ausführungsbeispiel ist dadurch gekennzeichnet, dass das Füllmittel nach dem Einbringen der katalytisch aktiven Beschichtung aus dem Luftspalt entfernt wird. Dies ist vorteilhaft, um das Füllmittel vor dem Inbetriebnehmen der Vorrichtung zu entfernen. Andernfalls könnte sich das Füllmittel im Betrieb unter den mechanischen Belastungen und den thermischen Wechseleinwirkungen aus dem Luftspalt lösen. Und Strömungskanäle verblocken oder zu einer Beschädigung von Komponenten im Abgasstrang führen.

Auch ist es zu bevorzugen, wenn das Füllmittel durch einen thermischen Prozess aus dem Luftspalt entfernt wird. Dies ist vorteilhaft, da der Wabenkörper beziehungsweise die gesamte Vorrichtung regelmäßig mehrere Prozessschritte durchläuft, in welchen stark erhöhte Temperaturen auf diese einwirken. Es kann somit, ohne einen zusätzlichen Arbeitsschritt vorzusehen, sichergestellt werden, dass das Füllmittel über eine für das Füllmittel kritische Temperatur erwärmt wird und sich das Füllmittel dadurch auflöst.

Darüber hinaus ist es vorteilhaft, wenn das Ausfüllen des Luftspaltes derart erfolgt, dass der der Einbringstelle, durch welche die katalytisch aktive Beschichtung eingebracht wird, zugewandte Öffnungsquerschnitt von dem Füllmittel verschlossen wird. Dies ist besonders wichtig, um sicherzustellen, dass sich keinerlei Beschichtungsmaterial im Luftspalt festsetzen kann. Durch den Verschluss des Öffnungsquerschnitts ist dies sichergestellt.

In einer bevorzugten Ausführung kann das Füllmittel derart gestaltet sein, dass es sich nach dem Einbringen ausdehnt und gegebenenfalls eine Teilmenge des eingebrachten Füllmittels aus dem Luftspalt hinausquillt, um sicherzustellen, dass keinerlei Beschichtungsmaterial in den Luftspalt geraten kann.

Vorteilhafte Weiterbildungen der vorliegenden Erfindung sind in den Unteransprüchen und in der nachfolgenden Figurenbeschreibung beschrieben.

### Kurze Beschreibung der Zeichnungen

Im Folgenden wird die Erfindung anhand eines Ausführungsbeispiels unter Bezugnahme auf die Zeichnung detailliert erläutert. In der Zeichnung zeigt:

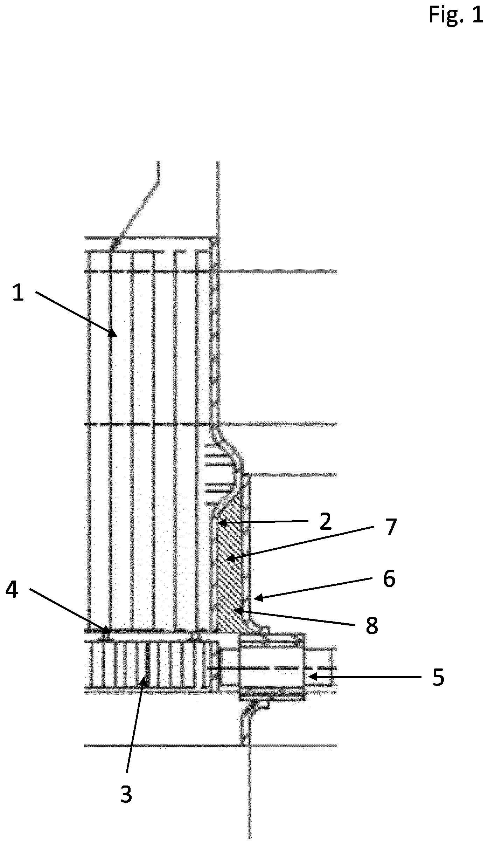

- Fig. 1: eine Schnittansicht durch einen Wabenkörper, welcher in einem Außenmantel aufgenommen ist, wobei der zwischen dem Innenmantel des Wabenkörpers und dem Außenmantel ausgebildete Luftspalt mit einem Füllmittel ausgefüllt ist.

### Bevorzugte Ausführung der Erfindung

Die Figur 1 zeigt eine Vorrichtung zur Abgasnachbehandlung in einer Schnittansicht. Zentral ist ein Wabenkörper 1 angeordnet, welcher aus einer metallischen Matrix gebildet ist. Der Wabenkörper 1 ist in einem Innenmantel 2 aufgenommen, welcher die Matrix fixiert, gegen auffächern und aufrollen schützt und gleichzeitig die Matrix vor mechanischen Einflüssen schützt. Wabenkörper dieser Bauart sind im Stand der Technik in vielfältiger Weise bekannt.

In der Abbildung der Figur 1 ist dem Wabenkörper 1 eine Heizscheibe 3 vorgelagert, welche über Stützstifte 4 mit dem Wabenkörper 1 verbunden ist. Die Heizscheibe 3 ist über die gezeigte elektrische Durchführung 5 mit einer Spannungsquelle verbunden und kann somit bestromt werden, wodurch eine Aufheizung erreicht wird.

Der Wabenkörper 1 mit seinem Innenmantel 2 ist in einen Außenmantel 6 eingesetzt und mit diesem dauerhaltbar beispielsweise durch Löten verbunden. Zwischen dem Außenmantel 6 und dem Innenmantel 2 ist ein Luftspalt 7 ausgebildet. Diese kann infolge der Bauteilgeometrie gezielt entstehen, oder aber auch infolge von Toleranzen zwischen den Bauteilen ausgebildet werden. Auch sind Luftspalte grundsätzlich zwischen allen Komponenten der Vorrichtung denkbar.

Der Luftspalt 7 ist im Ausführungsbeispiel der Figur 1 durch ein Füllmittel 8 ausgefüllt, so dass insbesondere von der der Heizscheibe 3 zugewandten Seite nichts in dien Luftspalt 7 eindringen kann.

Der Washcoat, mit welchem die Matrix des Wabenkörpers 1 beschichtet wird, wird beispielsweise mit Überdruck in den Wabenkörper gedrückt und/oder mit Unterdruck durch diesen gezogen. Auch kann der Wabenkörper 1 mit dem Washcoat gespült werden. Bei alle diesen Verfahren ist es sehr wahrscheinlich, dass Washcoat in den Luftspalt 7 eindringen würde, wenn dieser nicht verschlossen ist.

Das Füllmittel kann beispielsweise mittels einer Injektionsnadel gezielt in den Luftspalt 7 eingebracht werden, um diesen auszufüllen und insbesondere den offenen Querschnitt auszufüllen.

Das Ausführungsbeispiel der Figur 1weist insbesondere keinen beschränkenden Charakter auf und dient der Verdeutlichung des Erfindungsgedankens.

## Patentansprüche

1. Verfahren zur Herstellung einer Vorrichtung zur Nachbehandlung von Abgasen und zur Beschichtung eines in der Vorrichtung vorgesehenen Wabenkörpers (1) mit einer katalytisch aktiven Oberflächenbeschichtung, wobei der Wabenkörper (1) aus einer Mehrzahl von metallischen zumindest teilweise strukturierten Folien gebildet ist, die aufeinander gestapelt und aufgewickelt sind, so dass der Wabenkörper eine Mehrzahl von entlang einer Hauptdurchströmungsrichtung durchströmbare Strömungskanäle ausbildet, wobei der Wabenkörper in einem Innenmantel (2) aufgenommen ist und mit diesem dauerhaltbar verbunden ist, wobei der Innenmantel (2) in einem als Gehäuse dienenden Außenmantel (6) angeordnet ist und mit diesem dauerhaltbar verbunden ist, **dadurch gekennzeichnet , dass** vor dem Einbringen der katalytisch aktiven Beschichtung in die von dem Wabenkörper (1) ausgebildeten Strömungskanäle ein Luftspalt (7) oder Luftspalte, welche sich zwischen dem Außenmantel (6) und dem Innenmantel (2) ausgebildet haben, durch ein Füllmittel (8) ausgefüllt werden.

2. Verfahren nach Anspruch 1, **dadurch gekennzeichnet , dass** das Füllmittel (8) eine gelartige organische Masse ist.

3. Verfahren nach einem der vorhergehenden Ansprüche, **dadurch gekennzeichnet , dass** das Füllmittel (8) in die Luftspalte (7) eingebracht wird, bevor die Vorrichtung einer weiteren Wärmebehandlung, wie beispielswiese dem Trocknen oder dem Kalzinieren unterzogen wird.

4. Verfahren nach einem der vorhergehenden Ansprüche, **dadurch gekennzeichnet , dass** das Füllmittel (8) nach dem Einbringen der katalytisch aktiven Beschichtung aus dem Luftspalt (7) entfernt wird.

5. Verfahren nach einem der vorhergehenden Ansprüche, **dadurch gekennzeichnet , dass** das Füllmittel (8) durch einen thermischen Prozess aus dem Luftspalt (7) entfernt wird.

6. Verfahren nach einem der vorhergehenden Ansprüche, **dadurch gekennzeichnet, dass** das Ausfüllen des Luftspaltes (7) derart erfolgt, dass der der Einbringstelle, durch welche die katalytisch aktive Beschichtung eingebracht wird, zugewandte Öffnungsquerschnitt von dem Füllmittel (8) verschlossen wird.

## Claims

1. Method for producing a device for the aftertreatment of exhaust gases and for coating a honeycomb body (1), provided in the device, with a catalytically active surface coating, wherein the honeycomb body (1) is formed from a multiplicity of metallic, at least partially structured foils which are stacked one on top of another and wound so that the honeycomb body forms a multiplicity of flow channels through which fluid can flow along a main flow direction, wherein the honeycomb body is received in an inner casing (2) and is durably connected thereto, wherein the inner casing (2) is arranged in an outer casing (6) serving as a housing and is durably connected thereto, **characterized in that**, before the introduction of the catalytically active coating into the flow channels formed by the honeycomb body (1), an air gap (7) or air gaps, which have been formed between the outer casing (6) and the inner casing (2), are filled by a filler (8).

2. Method according to Claim 1, **characterized in that** the filler (8) is a gel-like organic composition.

3. Method according to either of the preceding claims, **characterized in that** the filler (8) is introduced into the air gaps (7) before the device is subjected to a further heat treatment, for example drying or calcining.

4. Method according to one of the preceding claims, **characterized in that** the filler (8) is removed from the air gap (7) after the introduction of the catalytically active coating.

5. Method according to one of the preceding claims, **characterized in that** the filler (8) is removed from the air gap (7) by a thermal process.

6. Method according to one of the preceding claims, **characterized in that** the filling of the air gap (7) is carried out in such a way that the opening cross section facing toward the introduction site through which the catalytically active coating is introduced is sealed by the filler (8).

## Revendications

1. Procédé de fabrication d'un dispositif de post-traitement de gaz d'échappement et de revêtement d'un corps en nid d'abeilles (1) prévu dans le dispositif avec un revêtement de surface catalytiquement actif, le corps en nid d'abeilles (1) étant formé par une pluralité de feuilles métalliques au moins partiellement structurées, qui sont empilées et enroulées les unes sur les autres, de sorte que le corps en nid d'abeilles forme une pluralité de canaux d'écoulement aptes à être traversés le long d'une direction principale d'écoulement, le corps en nid d'abeilles étant logé dans une enveloppe intérieure (2) et étant relié à celle-ci de manière durable, l'enveloppe intérieure (2) étant agencée dans une enveloppe extérieure (6) servant de boîtier et étant reliée à celle-ci de manière durable, **caractérisé en ce qu'**avant l'introduction du revêtement catalytiquement actif dans les canaux d'écoulement formés par le corps en nid d'abeilles (1), un espace d'air (7) ou des espaces d'air, qui se sont formés entre l'enveloppe extérieure (6) et l'enveloppe intérieure (2), sont remplis par un agent de remplissage (8).

2. Procédé selon la revendication 1, **caractérisé en ce que** l'agent de remplissage (8) est une masse organique de type gel.

3. Procédé selon l'une des revendications précédentes, **caractérisé en ce que** l'agent de remplissage (8) est introduit dans les espaces d'air (7) avant que le dispositif ne soit soumis à un autre traitement thermique, tel que par exemple un séchage ou une calcination.

4. Procédé selon l'une des revendications précédentes, **caractérisé en ce que** l'agent de remplissage (8) est retiré de l'espace d'air (7) après l'introduction du revêtement catalytiquement actif.

5. Procédé selon l'une des revendications précédentes, **caractérisé en ce que** l'agent de remplissage (8) est éliminé de l'espace d'air (7) par un processus thermique.

6. Procédé selon l'une des revendications précédentes, **caractérisé en ce que** le remplissage de l'espace d'air (7) s'effectue de telle sorte que la section d'ouverture tournée vers le point d'introduction, par lequel le revêtement catalytiquement actif est introduit, est fermée par l'agent de remplissage (8).
